# EUROPÄISCHE PATENTANMELDUNG

(11) **EP 0 677 977 A1**
(43) Veröffentlichungstag der Anmeldung: **18.10.1995**
(21) Anmeldenummer: 95810171.9
(22) Anmeldetag: 15.03.1995
(51) Int. Cl.: H04R 1/00, H04R 19/04, H04M 1/62

(54) **Halterung für eine Microfonkapsel**

(30) Priorität: 16.03.1994 CH 775/94
(71) Anmelder: Peiker, Andreas, D-61381 Friedrichsdorf/Ts (DE)
(72) Erfinder: Peiker, Andreas, D-61381 Friedrichsdorf/Ts (DE)
(74) Vertreter: Roshardt, Werner Alfred, Dipl.-Phys.

(57) **Zusammenfassung**

Eine Halterung für eine Mikrofonkapsel (7) wird als halbschalenartiges (3) Formteil ausgebildet, in welchem die Mikrofonkapsel (7) mit ihrer Achse parallel zur Halbschalenbegrenzungsebene (4) befestigbar ist. Die Halterung eignet sich z.B. für ein Elektretmikrofon. Sie kann in einem Gehäusefrontbauteil eingefügt werden. Zu diesem Zweck weist das Gehäusefrontbauteil hinter einem mit Öffnungen versehenen Bereich Seitenwände auf, die einen nach hinten offenen kastenartig begrenzten Innenraum bilden. Das Gehäusefrontbauteil kann mit einem Gehäuserückseitenbauteil zu einer quaderförmigen Raumform abgeschlossen werden.

## Beschreibung

### Technisches Gebiet

Die Erfindung bezieht sich auf eine Halterung für eine Mikrofonkapsel, auf ein Gehäusefront- und ein Gehäuserückseitenbauteil, auf ein versenkt einbaubares und auf ein auf eine Montageebene aufsetzbares Freisprechmikrofon.

### Stand der Technik

Freisprechmikrofone finden z.B. bei Telefongeräten, bei Konferenztischen, bei Bank- und Billettschaltern etc. Anwendung. Derartige Mikrofone sollten klein sein, damit sie entsprechend den jeweiligen Bedürfnissen ohne Probleme am gewünschten Ort angebracht werden können. Zu den typischen Montagearten gehören einerseits die versenkte und andererseits die aufgesetzte Montage.

### Darstellung der Erfindung

Aufgabe der Erfindung ist es nun, eine Halterung der eingangs genannten Art anzugeben, die vielseitig einsetzbar ist, so dass nicht für jede Anwendung eine spezifische Halterung entwickelt und produziert werden muss.

Gemäss der Erfindung besteht die Lösung darin, dass eine solche Halterung als halbschalenartiges Formteil ausgebildet ist, in welcher die Mikrofonkapsel mit ihrer Achse parallel zur Halbschalenbegrenzungsebene befestigbar ist.

Das Formteil ist in ein geeignet ausgebildetes Gehäusebauteil einfügbar resp. einzufügen, wobei die Mikrofonkapsel eingekapselt wird. Das Formteil ist auf die akustischen Erfordernisse der Mikrofonkapsel abgestimmt und gibt dadurch wichtige Eigenschaften des Gesamtsystems vor. Der Kerngedanke der Erfindung liegt also darin, dass die Lagerung eine Art "Halbteil" darstellt, welches in unterschiedliche Gehäusekonfigurationen einbaubar ist.

Gemäss einer bevorzugten Ausführungsform weist das Formteil zwei bogenförmige Anschlagelemente auf, zwischen welchen die Mikrofonkapsel - axial begrenzt - befestigbar ist. Die genannten Anschlagelemente sind so angeordnet, dass vor und hinter der Mikrofonkapsel je ein - vorzugsweise unterschiedlich grosses - Raumvolumen gebildet ist. Eine solche Halterung eignet sich insbesondere zur Lagerung einer Elektretmikrofonkapsel zylindrischer Bauweise. Am vorderen Ende des Zylinders ist dabei die Membran und am rückseitigen Ende der elektrische Anschluss vorgesehen. Die bogenförmigen Anschlagelemente lassen die zentralen Bereiche bewusst frei. Die Mikrofonkapsel ist also liegend eingebaut.

Mit Vorteil ist das Formteil wannenähnlich und hat aussenseitig einen überstehenden Anschlagflansch. Dieser ist nützlich beim Einfügen der Halterung in ein Gehäusebauteil.

Gemäss einer weiteren vorteilhaften Ausführungsform ist das Formteil innenseitig im wesentlichen halbzylindrisch ausgenommen. Durch eine geeignet ausgebildete Durchtrittsöffnung des Formteils können Mikrofonkabel geführt werden.

Ein Gehäusefrontbauteil zur Aufnahme einer Mikrofonkapselhalterung der obengenannten Art zwecks Bildung einer Mikrofonsystemverkapselung hat eine Frontseite mit Oeffnungen für den Schalldurchtritt, hinter welchen Seitenwände zur Bildung eines rückseitig offenen kastenartigen Raums vorgesehen sind, so dass die Halterung in den kastenartig begrenzten Innenraum einsetzbar ist. Durch das Einsetzen der Halterung in das Gehäusefrontbauteil wird die Mikrofonkapsel verkapselt. Die plattenartige Frontseite ragt über die senkrecht zu ihr stehenden Seitenwände hinaus.

Das erfindungsgemässe Gehäusefrontbauteil eignet sich zur versenkten Montage eines Mikrofons (vgl. Unterflur- oder Unterputzanordnung).

Vorzugsweise sind die Oeffnungen Schlitze, die in einem länglichen rechteckigen Bereich nebeneinander angeordnet sind. Die Schlitze stehen in Querrichtung zur Längsachse des genannten Bereichs. In Richtung der Längsachse ist auch die maximale Empfindlichkeit des Freisprechmikrofons.

Ausserhalb der Seitenwände sind - vorzugsweise an der Frontplatte - Mittel zum Festhalten einer Schaltungsplatine vorgesehen. Auf der Schaltungsplatine kann z.B. eine Verstärkerschaltung angeordnet sein. Die genannten Mittel sind z.B. Träger- und Hakenelemente, die die Seitenwände überragen, so dass die Platine in Abstand zu den Seitenwänden gehalten werden kann.

Vorzugsweise ist das Gehäusefrontbauteil länglich und an einem Ende sanft abgerundet, so dass es eine mausähnliche Erscheinungsform hat. Die Schlitze für den Schalldurchtritt befinden sich auf dem "Rücken" der "Maus".

Vorzugsweise ist das Gehäusefrontbauteil durch ein Gehäuserückseitenbauteil zur Bildung eines z.B. quaderförmigen Gehäuses abdeck- resp. abschliessbar. Das erfindungsgemässe Gehäusefrontbauteil kann also sowohl für eine versenkte als auch für eine aufgesetzte Montage verwendet werden. Ein versenktes Mikrofonsystem besteht nur aus Mikrofonkapsel, Halterung und Gehäusefrontbauteil, während das aufsetzbare Freisprechmikrofon zusätzlich ein Gehäuserückseitenbauteil aufweist.

Aus der Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1a-c: Eine erfindungsgemässe Halterung in der Draufsicht, im Längsund im Querschnitt;
- Fig. 2a,b: ein erfindungsgemässes Gehäusefrontbauteil in der Draufsicht und im Längsschnitt;
- Fig. 3a,b: ein erfindungsgemässes Gehäuserückseitenbauteil im Längsschnitt und in der Draufsicht;
- Fig. 4a,b: ein Freisprechmikrofon für die versenkte Montage;
- Fig. 5a,b: ein erfindungsgemässes mausähnliches Mikrofongehäuse von der Seite und in der Draufsicht;
- Fig. 6: eine Schnittdarstellung der die Halterung abschliessenden Haube;
- Fig. 7a,b: die Halterung für die Mikrofonkapsel in der Seitenansicht und in der Draufsicht.

Grundsätzlich sind in den Figuren gleiche Teile mit gleichen Bezugszeichen versehen.

### Wege zur Ausführung der Erfindung

Fig. 1a-c zeigt eine Halterung 1 für eine Mikrofonkapsel 7 (z.B. eine Elektretmikrofonkapsel). Bei der Halterung 1 handelt es sich um ein Formteil aus Kunststoff mit einer Bodenplatte 2 und einer daran angeformten Halbschale 3. Letztere hat wannenartige Ausnehmungen 5.1, 5.2, 5.3, die gegen die Halbschalenbegrenzungsebene 4 hin offen sind.

Zwei Rippen 6.1, 6.2 trennen die Ausnehmungen 5.1, 5.2, 5.3 gegeneinander teilweise ab.

In die mittlere Ausnehmung 5.2 ist die Mikrofonkapsel 7 einsetzbar. In axialer Richtung wird sie begrenzt durch die beiden Rippen 6.1 und 6.2. In Achsenrichtung vor und hinter der zylindrischen Mikrofonkapsel 7 liegen die beiden Ausnehmungen 5.3 resp. 5.1. Sie bilden zwei unterschiedlich grosse Räume und sind so bemessen, dass der Frequenzgang des Elektretmikrofons nicht negativ beeinträchtigt wird.

Alle drei Ausnehmungen 5.1, 5.2, 5.3 sind zumindest näherungsweise halbzylindrisch.

Auf der Vorderseite, d.h. zur Ausnehmung 5.3 gerichtet, befindet sich die Membran. Sie gibt im Prinzip die Achsenrichtung der Mikrofonkapsel 7 vor (Richtung senkrecht zur Membran). Die rückseitigen elektrischen Anschlüsse 8.1, 8.2 zeigen zur Ausnehmung 5.1 hin. An den Anschlüssen 8.1, 8.2 angeschlossene Kabel 9 können durch einen Kabelkanal 10 durch die Bodenplatte 2 hindurch nach aussen geführt werden. Die Mündung 11 des Kabelkanals 10 ragt über die Bodenplatte 2 hinaus. Der Kabelkanal 10 verjüngt sich konisch von der Ausnehmung 5.1 zur Mündung 11 hin.

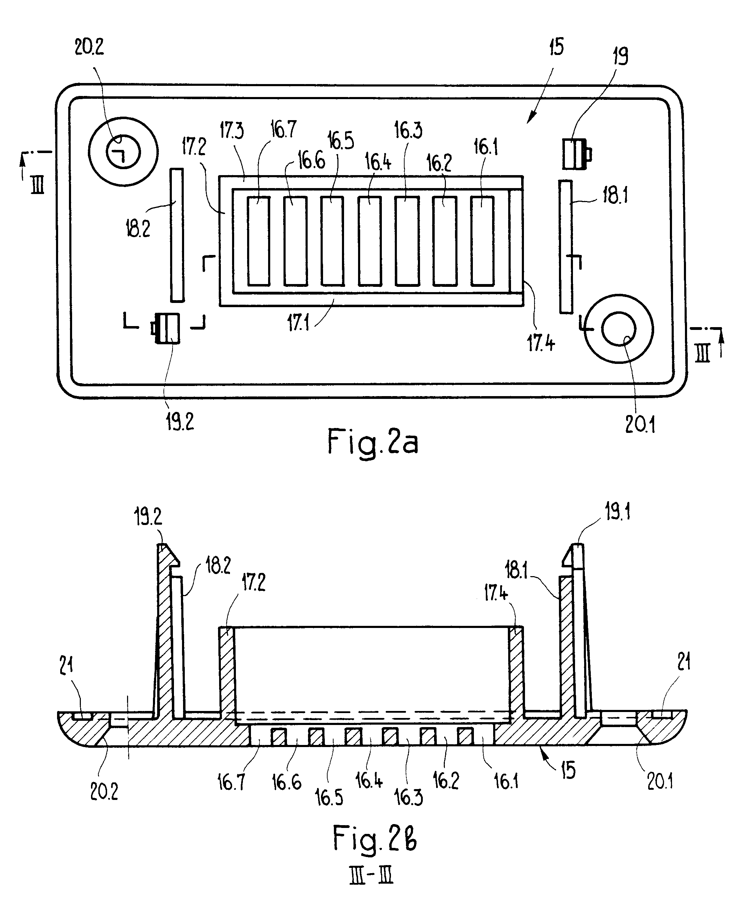

Dadurch, dass die Bodenplatte 2 über die Halbschale 3 allseitig hinausragt, wird ein umlaufender Anschlag 12 gebildet. Seine Funktion wird im Zusammenhang mit den Fig. 2a, b näher erläutert.

Die Bodenplatte 2 ist entlang einer Längsseite mit einer Abschrägung 13 versehen.

In den Fig. 2a, b ist ein Gehäusefrontbauteil zur Aufnahme der Halterung gemäss Fig. la-c gezeigt. Eine Frontplatte 15 weist einen zentral angeordneten rechteckigen Bereich mit schlitzförmigen Öffnungen 16.1, .., 16.7 auf. Die schlitzförmigen Öffnungen 16.1, .., 16.7 sind in einer Reihe nebeneinander angeordnet und stehen senkrecht zur Längsseite der Frontplatte 15.

Der rechteckige Bereich mit den Öffnungen 16.1, .., 16.7 ist durch vier Seitenwände 17.1, .. 17.4 umgeben. Diese stehen senkrecht zur Frontplatte 15 und begrenzen kastenartig einen nach hinten vollständig offenen Innenraum. In diesen Innenraum wird die Halterung 1 so eingefügt, dass die Bodenplatte 2 mit ihrem Randanschlag 12 auf den Schmalseiten der Seitenwände 17.1, .., 17.4 aufliegt und die Halbschale 3 in den Innenraum hineinragt. Die Mikrofonkapsel 7 wird auf diese Weise eingekapselt.

Der Bereich mit den Öffnungen 16.1, .., 16.7 nimmt nur einen kleinen Teil der Gesamtfläche der Frontplatte 15 ein (z.B. einen Viertel der Fläche). Ausserhalb der Seitenwände 17.1, .., 17.4 verbleibt also genügend Platz für zwei z.B. plattenförmige Träger 18.1, 18.2 und zwei z.B. stabförmige Hakenelemente 19.1, 19.2. Auf die Träger 18.1, 18.2, die im vorliegenden Fall in einem geringen Abstand zu den Seitenwänden 17.4 resp. 17.2 senkrecht zur Frontplatte 15 stehen, kann eine kleine Verstärkerplatine aufgelegt und mit den Hakenelementen 19.1, 19.2 fixiert werden. Damit die Platine einen Abstand zu den Seitenwänden 17.1, .., 17.4 resp. zur Bodenplatte 2 der eingefügten Lagerung hat, überragen Träger 18.1, 18.2 und Hakenelemente 19.1, 19.2 die Seitenwände 17.1, .., 17.4 um ein geeignetes Mass. Die Hakenelemente 19.1, 19.2 sind seitlich neben den Trägern 18.1, 18.2 - und zwar einander bzgl. des Mittelpunktes der Frontplatt 5 diametral gegenüberliegend - angeordnet.

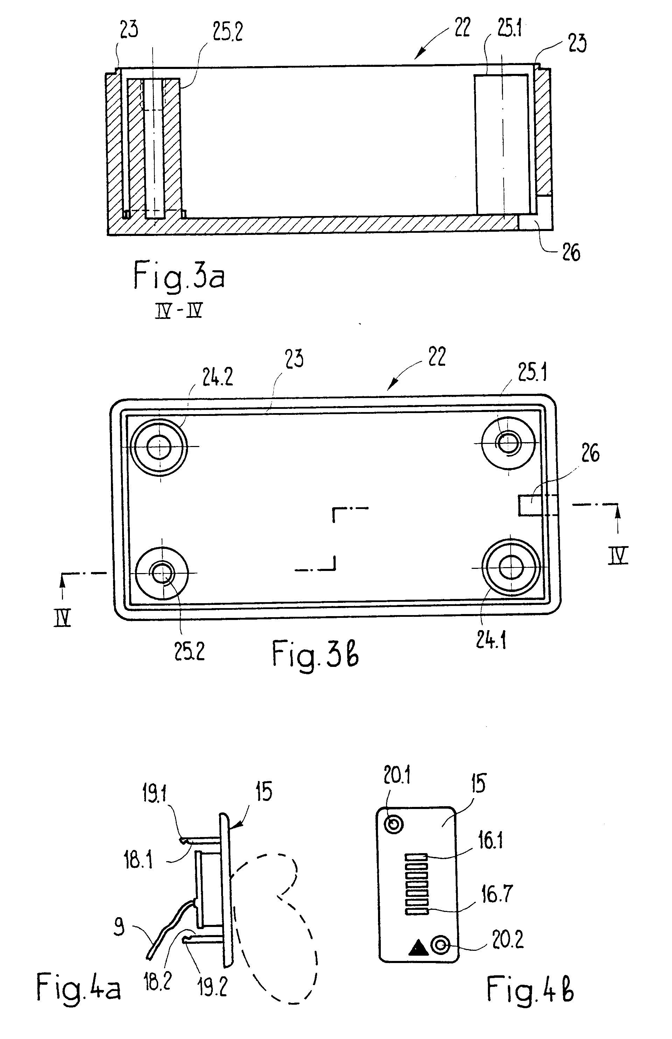

Zum Festschrauben der Frontplatte 15 sind in einander diametral gegenüberliegenden Ecken der Frontplatte 15 zwei Senklöcher 20.1, 20.2 vorgesehen. Ferner ist auf der Rückseite der Frontplatte 15 eine entlang des Randes umlaufende Vertiefung 21 zur Montage des in Fig. 3a, b gezeigten Bauteils vorgesehen.

In Fig. 4a, b ist das Gehäusefrontbauteil mit eingefügter Halterung von der Seite und von vorne gezeigt. Mit einem in Fig. 4b auf der Längsmittelachse eingezeichneten Pfeil (neben dem Senkloch 20.2) ist die Richtung angezeigt. Die maximale Empfindlichkeit eines derartigen Sprechmikrofons liegt mehr oher weniger parallel zur Frontplatte 15 in Richtung der Längsmittelachse. Zur Veranschaulichung ist eine durch die beschriebene Konstruktion typischerweise realisierte Richtcharakteristik dargestellt (gestrichelte Linie in Fig. 4a).

Fig. 3a, b zeigt schliesslich ein erfindungsgemässes kastenförmiges Gehäuserückseitenbauteil 22. Es kann über die Rückseite des in Fig. 2a, b gezeigten Bauteils gestülpt werden. Ein auf der Stirnseite der Seitenwände vorgesehener umlaufender Vorsprung 23 passt in die Vertiefung 21 der Frontplatte 15. In zwei einander diametral gegenüberliegenden Ecken des Bodens des Gehäuserückseitenbauteils 22 sind zwei Hohlzylinder 24.1, 24.2 als Gewinderöhrchen vorgesehen. Das Bauteil gemäss Fig. 2b kann somit durch in die Senklöcher 20.1, 20.2 eingesetzte Schrauben am Gehäuserückseitenbauteil resp. den Hohlzylindern 24.1, 24.2 fixiert werden.

An den verbleibenden beiden Ecken des Bodens sind Senklöcher 25.1, 25.2 ausgebildet, um das Gehäuserückseitenbauteil 22 resp. das kastenförmige Mikrofonsystem auf einer Unterlagsfläche zu befestigen.

Für den Kabeldurchtritt ist eine - vorzugsweise an der Schmalseite des Bodens angeordnete - Oeffnung vorgesehen. Im vorliegenden Beispiel geht sie über die entsprechende Kante hinaus, so dass sowohl Boden als auch Seitenwand durchbrochen sind.

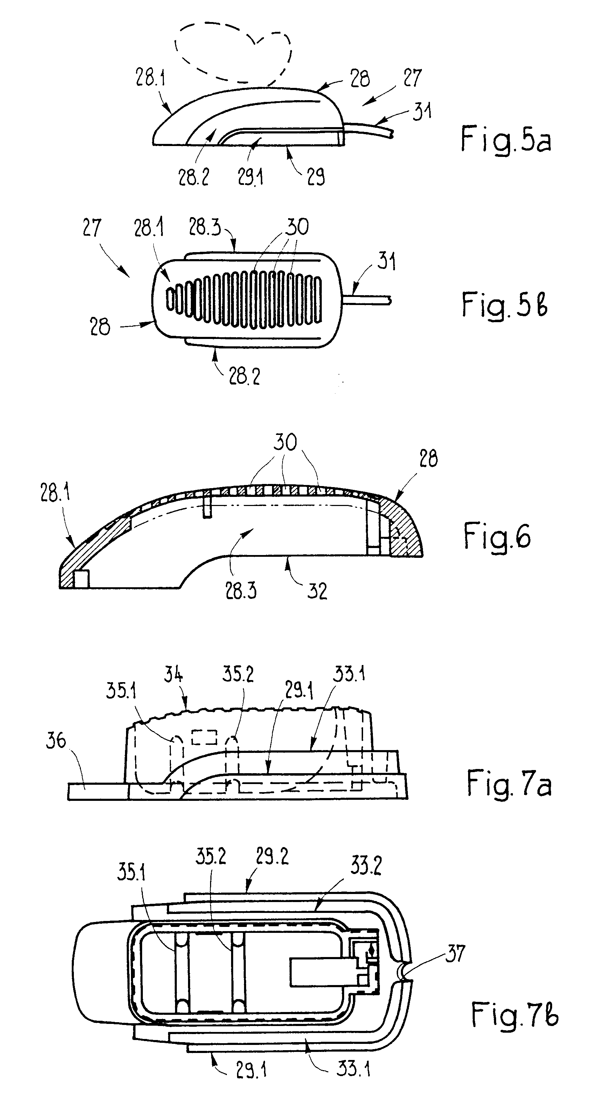

Anhand der Fig. 5a, b, 6 und 7a, b soll ein besonders bevorzugtes Ausführungsbeispiel erläutert werden, das sich durch eine mausähnliche Gestaltung auszeichnet.

Fig. 5a, b zeigt dieses Ausführungsbeispiel von der Seite und in der Draufsicht. Ein Gehäuse 27 mit einer Länge von z.B. 2-3 cm und einer Breite von z.B. 1-2 cm weist eine Haube 28 auf, die an einer Frontseite 28.1 mit grossem Krümmungsradius abgerundet ist. An den Längsseiten der Haube 28 sind zwei Flanken 28.2, 28.3 ausgebildet. Sie laufen von hinten nach vorne, wobei sie im vorderen Bereich eine ähnliche Krümmung wie die Frontseite 28.1 ausweisen. Sie bilden eine geringfügige Verbreiterung in Querrichtung der Haube 28.

Unter der Haube 28 befindet sich eine Halterung 29, welche in Fig. 7a, b erkennbar ist. Niedrige Seitenwände 29.1, 29.2 laufen von hinten nach vorne und enden bei ca. 2/3 der Länge der Haube 28. An ihrem vorderen Ende haben sie eine Abrundung, die entsprechend derjenigen der Flanke 28.2 und derjenigen der Frontseite 28.1 geführt ist (einfach mit kleinerem Radius). Aus einer Hinterseite des Gehäuses 27 läuft ein Kabel 31 weg.

Auf der Oberseite der Haube 28 (quasi dem "Rücken" der "Maus") sind Schlitze 30 für den Schalldurchtritt ausgebildet. Sie verlaufen quer zur Längsrichtung des Gehäuses 27 und decken eine bootsförmige Fläche ab. Analog zu Fig. 4a ist wiederum eine typische Richtcharakteristik dargestellt (vgl. gestrichelte Kurve in Fig. 5a).

Fig. 6 zeigt die Haube 28 im Schnitt. Es ist zu erkennen, dass die Flanken (vgl. Bezugszeichen 28.3) mit Ausnehmungen (vgl. Bezugszeichen 22) entsprechend den Seitenwänden 29.1, 29.2 versehen sind.

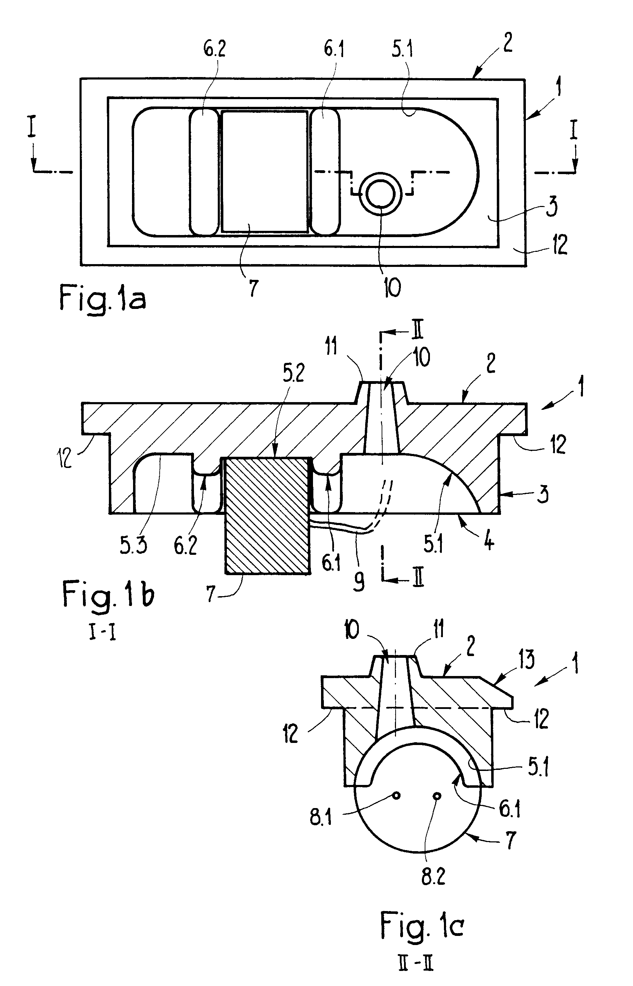

Fig. 7a, b zeigt die Halterung 29 in der Seitenansicht und in der Draufsicht. Innenseitig ist sie völlig analog zu der in Fig. 1a, b gezeigten ausgeführt (vgl. insbesondere Rippen 35.1, 35.2 der Halbschale 34 sowie die in Fig. 7a gestrichelt gezeichneten Innenkonturen). Innenseitig der Seitenwände 29.1, 29.2 laufen erhöhte Umrandungen 33.1, 33.2. An der Rückseite ist ein Durchgang 37 für das Kabel 31 vorgesehen. Die die Mikrofonkapsel aufnehmende Halbschale 34 ist deutlich kürzer als eine Bodenplatte 36 der Halterung. Die frontseitige Abrundung (28.1) des Gehäuses wirkt sich somit nicht auf die akustischen Verhältnisse aus (da der unter der Abschrägung 28.1 liegende Frontraum durch die Wandung der Halbschale 34 abgekoppelt ist).

Das soeben erläuterte Ausführungsbeispiel eignet sich für die Ueberflurmontage.

Die beschriebenen Ausführungsformen können in vielfältiger Weise abgewandelt werden. Dies trifft insbesondere für die Mittel zur Befestigung der Platine, die Schraubverbindungen oder die Formen der einzelnen Bauteile als solche zu. So sind z.B. anstelle von Schraubverbindungen Schnapp- oder Klemmverbindungen möglich.

Zusammenfassend kann festgehalten werden, dass durch die Erfindung ein flexibles Baukastensystem zur Lagerung einer Mikrofonkapsel geschaffen worden ist. Insbesondere ermöglicht die liegende Anordnung der Mikrofonkapsel eine geringe Einbautiefe bzw. Bauhöhe und eine vorteilhafte Richtcharakteristik.

## Patentansprüche

1. Halterung für eine Mikrofonkapsel (7), dadurch gekennzeichnet, dass sie als halbschalenartiges (3) Formteil ausgebildet ist, in welchem die Mikrofonkapsel (7) mit ihrer Achse parallel zur Halbschalenbegrenzungsebene (4) befestigbar ist.

2. Halterung nach Anspruch 1, dadurch gekennzeichnet, dass zwei bogenförmige Anschlagelemente (6.1, 62.) vorgesehen sind, zwischen welchen die Mikrofonkapsel (7) axial begrenzt befestigbar ist, derart, dass vor und hinter der Mikrofonkapsel (7) je ein Raumvolumen gebildet ist.

3. Halterung nach Anspruch 1 oder 2, dadurch gekennzeichnet, dass das Formteil wannenähnlich ausgenommen (5.1, 5.2, 5.3) ist und aussenseitig einen überstehenden Anschlagflansch (12) hat.

4. Halterung nach einem der Ansprüche 1-3, dadurch gekennzeichnet, dass das Formteil innenseitig im wesentlichen halbzylindrisch ausgenommen ist und eine Öffnung (10) für den Kabeldurchtritt aufweist.

5. Gehäusefrontbauteil zur Aufnahme einer Mikrofonhalterung nach Anspruch 1 zwecks Bildung einer Mikrofonsystemverkapselung, wobei das Gehäusefrontbauteil eine Frontseite (15) mit Öffnungen (16.1, .., 16.7) für den Schalldurchtritt aufweist, dadurch gekennzeichnet, dass hinter den Öffnungen (16.1, .., 16.7) der Frontseite (15) Seitenwände (17.1, .., 17.4) zur Bildung eines rückseitig offenen, kasten- oder wannenartig begrenzten Raums vorgesehen sind, so dass die Mikrofonhalterung in den Innenraum einsetzbar ist, wobei die Mikrofonkapsel (7) gleichzeitig verkapselt ist.

6. Gehäusefrontbauteil nach Anspruch 5, dadurch gekennzeichnet, dass die Frontseite an einem Ende sanft abgerundet ist, um ein mausähnliches Aussehen zu zeigen.

7. Gehäusefrontbauteil nach Anspruch 5 oder 6, dadurch gekennzeichnet, dass die Öffnungen (16.1, .., 16.7) in einem länglichen rechteckigen oder bootsförmigen Bereich nebeneinander angeordnete Schlitze sind.

8. Gehäusefrontbauteil nach einem der Ansprüche 5 bis 7, dadurch gekennzeichnet, dass ausserhalb der Seitenwände (17.1, .., 17.4) diese überragende Mittel (18.1, 18.2, 19.1, 19.2) zum Festhalten einer Schaltungsplatine vorgesehen sind.

9. Versenkt einbaubares Freisprechmikrofon, bei welchem eine Mikrofonkapsel (7) in einer Halterung nach Anspruch 1 befestigt ist, welche ihrerseits in ein Gehäusefrontbauteil nach Anspruch 5 eingefügt ist.

10. Auf eine Montagefläche aufsetzbares Freisprechmikrofon, das durch ein versenkt einbaubares Freisprechmikrofon nach Anspruch 9 gebildet ist, welches mit einem kastenförmigen Bauteil rückseitig abgeschlossen ist zur Bildung einer geschlossenen quaderförmigen Raumform.
